# FASCICULE DE BREVET EUROPEEN

(11) **EP 2 162 295 B1**
(45) Date de publication et mention de la délivrance du brevet: **08.06.2016**
(21) Numéro de dépôt: 08774626.9
(22) Date de dépôt: 02.07.2008
(51) Int. Cl.: B42D 25/00, B42D 25/36, B42D 25/324, B42D 25/328, B42D 25/333, B42D 25/24, G06K 19/02, B42D 25/41, B42D 25/342, B42D 25/364, G07D 7/20

(54) **DOCUMENT DE SÉCURITÉ EN FORME DE LIVRET, AVEC UNE PAGE ADDITIONNELLE DE RÉVÉLATION D'UNE INFORMATION CACHÉE.**
SICHERHEITSDOKUMENT IN FORM EINER BROSCHÜRE MIT ZUSÄTZLICHER SEITE ZUR OFFENBARUNG VERSTECKTER INFORMATIONEN
SECURITY DOCUMENT IN THE FORM OF A BOOKLET, WITH AN ADDITIONAL PAGE REVEALING HIDDEN INFORMATION

(30) Priorité: 06.07.2007 FR 0704917
(43) Date de publication de la demande: 17.03.2010
(73) Titulaire: Oberthur Technologies, 75017 Paris (FR)
(72) Inventeur: LIEBER, Sophie, F-35200 Rennes (FR); DEMAIMAY, Florian, 35700 Rennes (FR); BORDE, Xavier, F-35410 Osse (FR)
(74) Mandataire: Cougard, Jean-Marie
(86) Numéro de dépôt international: PCT/EP2008/058488
(87) Numéro de publication internationale: WO 2009/007282

(56) Documents cités:
- EP-A- 1 147 912
- EP-A- 1 516 749
- WO-A-2004/011272
- WO-A-2005/108107
- WO-A-2006/029744
- WO-A-2006/029745
- DE-A1-102004 039 567

## Description

La présente invention s'inscrit dans le domaine des documents de sécurité comportant des données dites "personnelles", c'est-à-dire spécifiques à leur porteur et qui se présentent sous la forme d'un livret. Il s'agit notamment de documents consistant en des passeports.

Les données personnelles spécifiques au porteur évoquées ci-dessus sont par exemple sa photographie, les mentions patronymiques, relatives à ses noms, prénoms, adresse, sexe, etc.

Dans le domaine des passeports, la lutte contre les tentatives de falsification et de contrefaçon fait l'objet de développement de dispositifs toujours plus évolués. Ceci répond à un besoin permanent de renforcer le niveau de sécurité de ces documents.

Récemment, l'introduction de composants électroniques dans les passeports reflète bien cette nécessité de complexification technique. Cependant, les contrôles principalement effectués, dits de "premiers niveaux" ou de "premières lignes", nécessitent le développement de sécurités qui puissent être contrôlées directement par l'autorité compétente, sans utilisation de moyens extérieurs, c'est-à-dire sans appareil ou équipement authentificateur.

Dans le domaine évoqué ici, la page de données d'un passeport se trouve être la plus sensible car elle contient des données personnelles (photo, nom, prénom, date de naissance...) et des données variables (numéro de passeport, date de délivrance...).

Cette page contient également des lignes dites "OCR" lisibles par des équipements optiques. Pour cette raison, elle est appelée également page "MRP" (pour "Machine Readable Page").

La pratique frauduleuse la plus répandue consiste non pas à réaliser une contrefaçon complète du passeport, qui s'avère laborieuse et complexe pour un résultat souvent facilement détectable par les autorités, mais à falsifier les données personnelles sur un passeport authentique (le plus souvent volé à son détenteur légal) ou à réaliser une personnalisation frauduleuse sur un livret de passeport vierge dérobé, ce dernier cas étant néanmoins plus rare.

Afin de mieux sécuriser la page de données, la méthode la plus répandue consiste à la protéger à l'aide d'un film transparent. Ce film de sécurité, communément appelé laminât de protection ou adhésif de sécurité, est collé à froid ou à chaud sur cette page, après personnalisation de celle-ci. Les principaux développements réalisés sur ces films de sécurité visent à améliorer l'adhésion du film sur la page et à le sécuriser par incorporation de moyens de sécurités (éléments diffractifs, encres de sécurité, fragilisations...).

Cependant, cette solution n'est pas satisfaisante car le décollement du film de sécurité peut être obtenu plus ou moins aisément par différentes techniques.

Les données personnelles et variables sont alors accessibles à la falsification.

Enfin, soit le film de sécurité est repositionné, soit il est remplacé par une copie de ce dernier, plus ou moins bien imité.

Pour rendre la copie du film de sécurité toujours plus difficile, les fabricants y ont incorporé un grand nombre de sécurités. Cependant, cette amélioration est bien souvent néfaste, voire parfaitement contreproductive dans les cas où le film de protection est décollé de la page de données, sans être endommagé. En effet, dans ce cas, après falsification des données personnelles et variables, le film de sécurité est repositionné. Ainsi lors d'un contrôle, la complexité du film de sécurité (par la présence de nombreuses sécurités) rend paradoxalement plus difficile la détection des faux en nuisant à la visibilité des altérations des données et induisant de ce fait en erreur les autorités de contrôle qui authentifient le film de sécurité et non pas les données inscrites en dessous.

Il existe bien entendu des développements de sécurité qui permettent d'authentifier des données personnelles variables et de vérifier que ces dernières n'ont pas été altérées. Ainsi, il est connu d'y incorporer des informations cachées, c'est-à-dire non discernables à l'oeil nu. Il s'agit par exemple d'un message caché ou brouillé, d'un filigrane numérique, d'un traceur, etc.

Ces solutions permettent d'augmenter le degré de sécurité des données variables mais requièrent l'utilisation de moyens de contrôles extérieurs dont les autorités, qui effectuent les contrôles de 1^{er} niveau, sont très souvent dépourvues.

On connaît un document de sécurité qui intègre dans sa structure les moyens pour le décodage d'informations cachées, sans nécessiter de recourir à des moyens de contrôle extérieurs. Ce document a la forme d'un livret. Il comporte au moins une page de données sur laquelle sont présentes des données dites "personnelles", c'est à dire spécifiques à son porteur, et dont au moins une partie de ces données intègre au moins une information cachée non discernable à l'oeil nu. Ce livret comporte en outre une page additionnelle qui fait corps avec ce dernier et dont au moins une zone est translucide ou transparente, dans cette zone étant incorporé un moyen de révélation de ladite information cachée, cette page additionnelle permettant, en la plaquant contre ladite page de données, de lire à travers ladite zone, ladite information cachée, ceci sans dispositif et/ou apport d'énergie extérieur(s).

Une telle solution technique est donc intéressante puisqu'elle propose d'intégrer directement dans le document de sécurité les outils qui permettent l'authentification des données personnelles qui sont imprimées sur ladite page de données.

Les EP 1 147 912 et DE 10 2004 039 567 illustrent d'autres documents de sécurité.

La présente invention vise à perfectionner le document commenté plus haut, en améliorant encore les outils de sécurité qui y sont intégrés, pour rendre la tâche d'un contrefacteur potentiel, particulièrement ardue.

La présente invention est définie dans le jeu de revendications figurant ci-après.

Ainsi, la présente invention concerne un document de sécurité qui a la forme d'un livret, tel qu'un passeport, et qui comporte au moins une page de données sur laquelle sont présentes des données dites "personnelles", c'est à dire spécifiques à son porteur, et dont au moins une partie de ces données intègre au moins une information cachée non discernable à l'oeil nu, ou "élément caché", ce livret comportant une page additionnelle qui fait corps avec ce dernier et dont au moins une zone est translucide ou transparente, dans cette zone étant incorporé au moins un moyen de révélation de ladite information cachée, cette page additionnelle permettant, en la plaquant contre ladite page de données, de lire à travers ladite zone, ladite information cachée, ceci sans dispositif et/ou apport d'énergie extérieur(s).

Ce document est remarquable en ce que ladite page additionnelle comporte par ailleurs des informations reproduisant au moins partiellement lesdites données personnelles, sur l'une de ses faces (au verso ou au recto) ou les deux faces, recouvrant ou non tout ou partie dudit moyen de révélation.

Ainsi, si un fraudeur modifie les données personnelles de la page de données, il devra donc modifier la structure de la page additionnelle et tout particulièrement le moyen de révélation et les informations reproduisant les données personnelles, s'il veut espérer réaliser un faux ou une copie non discernable.

Dans ces conditions, les risques de falsification et de contrefaçon sont notablement réduits.

Dans l'ensemble de la présente demande, il est entendu par "données personnelles", toute information relative à l'identité du porteur du document, que cette information ait la forme d'une image (par exemple sa photographie) ou d'un message lisible (par exemple son nom).

Par ailleurs, il est entendu par "fait corps", le fait que ladite page additionnelle fait partie intégrante du livret, de sorte que toute tentative de séparation de cette page du livret se traduirait par une dégradation dudit livret.

Selon d'autres caractéristiques avantageuses et non limitatives :
- lesdites informations sont formées à l'aide d'un rayon laser, par altération superficielle ou à coeur de ladite page, ou encore par perforation ou micro perforation de cette dernière ;
- les informations sont imprimées, notamment par impression laser ou jet d'encre ;
- lesdites informations reproduisent au moins la partie des données personnelles qui intègre ledit élément caché ;
- l'intégralité de la page additionnelle est transparente ou translucide ;
- ledit moyen de révélation occupe tout ou partie de la surface de ladite page additionnelle ;
- au moins deux moyens différents de révélation sont combinés en une même localisation de ladite page additionnelle et sont aptes à révéler au moins deux informations cachées identiques ou différentes dans la même zone de la page de données ;
- il comporte deux pages de données, dont les données personnelles sont sur leurs faces en regard, et chacune de ces pages intègre au moins une information cachée non discernable à l'oeil nu, ladite page additionnelle comportant au moins deux moyens de révélation, un premier moyen étant apte à révéler l'information cachée associée à une desdites pages quand elle est plaquée contre elle, tandis que le second moyen est apte à révéler l'information cachée associée à l'autre page quand elle est plaquée contre elle ;
- lesdits moyens de révélation sont différents ;
- ledit moyen de révélation est choisi parmi les moyens suivants :
   - un réseau tramé en lignes apte à révéler une information cachée par la technique de stéganographie ;
   - un réseau tramé en points apte à révéler une information cachée par la technique de stéganographie ;
   - un filtre polarisant contenant des molécules chirales ou des cristaux liquides ;
   - un filtre coloré interférant avec la (ou les) couleur(s) avec laquelle (lesquelles) ladite information cachée est formée.
- ledit réseau tramé en lignes est imprimé, ou réalisé en relief, formant ainsi un réseau lenticulaire ;
- ledit réseau tramé en points est imprimé ou perforé ;
- ladite page additionnelle comporte par ailleurs au moins un moyen d'authentification et de sécurisation indépendant de l'identité du porteur, et qui peut être ou non en relation avec l'autorité émettrice ;
- ledit moyen d'authentification est réalisé par une impression, variable ou fixe, sur l'une des faces (au verso ou au recto) ou sur les deux faces de la page additionnelle, et recouvre ou non tout ou partie dudit moyen de révélation ;
- ledit moyen d'authentification est réalisé par modification mécanique de la surface de la page, créant ainsi des déformations en creux ou en relief décelables au toucher ;
- ledit moyen d'authentification consiste en un élément diffractif tel qu'un hologramme, ou en un motif obtenu par des jeux d'embossage et de vernissage.

D'autres caractéristiques et avantages de la présente invention apparaîtront à la lecture de la description qui va suivre de certains modes de réalisation préférentiels. Cette description sera faite en référence aux dessins annexés dans lesquels :
La figure 1 est une vue simplifiée en perspective d'une première forme de réalisation d'un document de sécurité conforme à l'état de la technique.
La figure 2 est un schéma destiné à expliquer une des manières utilisables pour cacher une information non discernable à l'oeil nu au sein de données imprimées.
La figure 3 est une vue de dessus de l'information dissimulée dans lesdites données.
Les figures 4 et 5 sont des vues analogues à la figure 1, montrant d'autres alternatives de réalisation du document de sécurité.
Les figures 6 et 7 sont des vues en perspective d'un mode de réalisation détaillé d'un document de sécurité conforme à la présente invention, la page additionnelle qu'il comporte étant représentée dans deux positions différentes.

La présente invention concerne donc un document de sécurité qui a la forme d'un livret. Dans l'ensemble de la présente description, ledit document de sécurité consistera en un passeport. Il ne s'agit que d'un exemple.

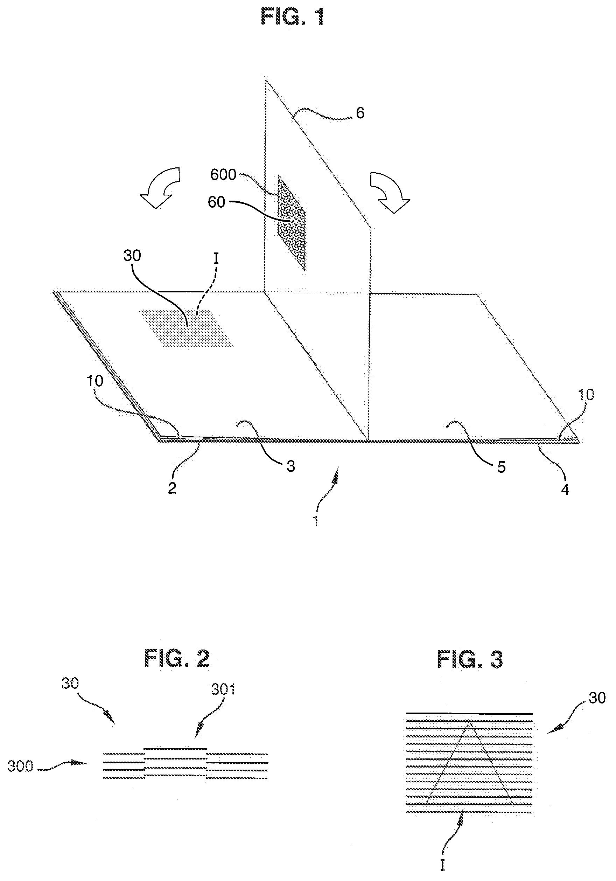

Le passeport qui est représenté à la figure 1 a une structure connue en soi.

Ce livret 1 comporte deux pages de couverture 10 et un ensemble de feuilles 2, 3, 4 et 5 qui sont pliées et solidarisées à ladite couverture au niveau d'une ligne médiane, de manière à constituer un ensemble d'un seul tenant, où les pages se tournent sans pouvoir être retirées. Leur mode d'assemblage est préférentiellement la couture.

L'une des ces pages, en l'occurrence la page 3 est une page de données sur laquelle sont présentes des données 30, dites "personnelles", c'est-à-dire spécifiques au porteur du passeport. Elle est préférentiellement revêtue d'un laminât de sécurité transparent.

Dans l'exemple représenté ici, ces données 30 ont la forme d'une figure géométrique grisée qui symbolise par exemple la photographie du porteur, celle-ci étant préférentiellement imprimée à l'aide de moyens informatiques sur la page 3.

Ces données 30 intègrent au moins une information cachée I non discernable à l'oeil nu.

Dans un mode de réalisation différent, l'information I pourrait être cachée non pas dans la photographie du porteur, mais dans ses informations d'identité.

Par ailleurs, le passeport comporte une page additionnelle 6 qui fait corps avec le livret 1 et dont au moins une zone est translucide ou transparente, dans cette zone étant incorporé au moins un moyen 60 de révélation de ladite information cachée I.

Ce moyen de révélation est implanté au niveau de la page additionnelle 6 de manière qu'en plaquant cette page 6 contre la page de données 3, on puisse lire à travers ladite zone l'information cachée I, ceci sans autre dispositif et/ou apport d'énergie extérieur(s).

Ladite information cachée peut être réalisée par la technique dite de stéganographie. Cette technique consiste à dissimuler un message dans un ensemble de données de façon que sa présence soit imperceptible à l'oeil nu.

En référence aux figures 2 et 3, on a illustré très schématiquement une des techniques pour y parvenir.

En l'occurrence, une donnée 30 est constituée d'un ensemble de lignes parallèles 300 dont la partie intermédiaire 301 est imperceptiblement décalée vers le haut.

Ainsi, sous réserve de lire cette donnée au travers d'un moyen de filtrage telles que des lignes parallèles dont la fréquence est identique à celles de lignes 300, on peut alors révéler une information cachée du type de celle illustrée à la figure 3, qui consiste ici en un motif de forme triangulaire.

Dans le mode de réalisation de la figure 1, le moyen de révélation 60 est intégré à l'intérieur d'une fenêtre 600 placée à l'intérieur de la page 6.

Cette fenêtre est formée d'une plaque de matière plastique.

Toutefois, l'intégralité de la page 6 pourrait être transparente ou translucide.

Le moyen de révélation 60 peut être choisi parmi les moyens suivants :
- un réseau tramé en ligne, apte à révéler une information I cachée par la technique dite de stéganographie ;
- un réseau tramé en points, apte à révéler une information I cachée par la technique dite de stéganographie ;
- un filtre polarisant contenant des molécules chirales ou des cristaux liquides ;
- un filtre coloré interférant avec la (ou les) couleur(s) avec laquelle (lesquelles) ladite information cachée est formée.

Dans un mode de réalisation préférentiel, ledit réseau tramé en lignes est imprimé, ou réalisé en relief, formant ainsi un réseau lenticulaire.

Egalement selon un autre mode de réalisation préférentiel, ledit réseau tramé en points est imprimé ou perforé.

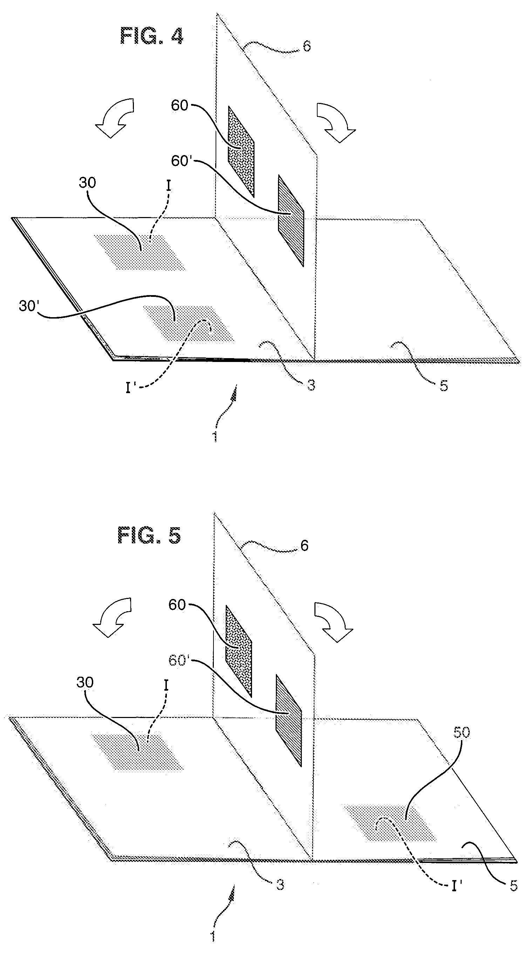

Dans le mode de réalisation de la figure 4, la même page de données 3 comporte deux informations cachées I et I', dissimulées au sein de données personnelles 30 et 30'.

Par ailleurs, la page additionnelle 6 comporte deux moyens de révélation distincts 60 et 60', l'un 60 étant apte à révéler l'information cachée I dissimulée dans les données 30, tandis que l'autre est apte à révéler une information I' dissimulée dans les données 30'.

Dans un tel cas, les moyens de révélation sont de préférence différents.

Il est aisément compréhensible que cette multiplication de moyens rend la tâche d'un éventuel contrefacteur particulièrement difficile.

Dans le mode de réalisation de la figure 5, on complique encore la tâche dudit fraudeur.

En l'occurrence, les informations I et I' ne sont pas portées par la même page, mais par les deux pages 3 et 5 qui encadrent la page additionnelle 6.

Au surplus, ces informations sont présentes sur les faces en regard desdites pages.

D'une manière similaire au précédent mode de réalisation, la page additionnelle 6 comporte deux moyens de révélation différents, l'un, 60, étant destiné à révéler l'image I, tandis que l'autre, 60', est destiné à révéler l'image I'.

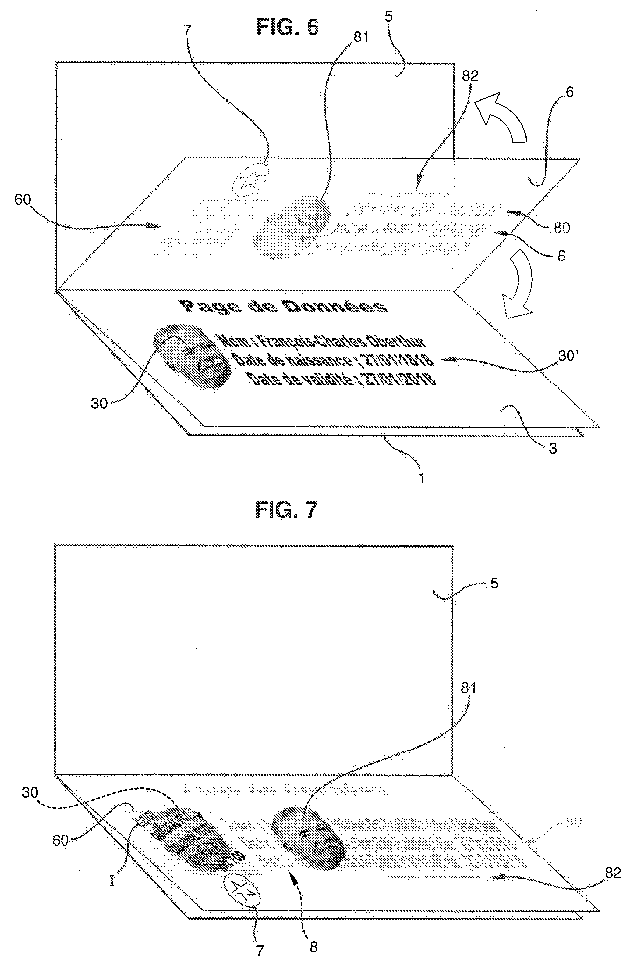

Aux figures 6 et 7 est représenté intégralement un mode de réalisation du document conforme à l'invention. Il présente une structure analogue à celle qui a été décrite en référence à la figure 1.

Il s'agit d'un passeport dont la page de données 3 comporte des premières données 30 consistant ici en la reproduction de la photographie du visage de son porteur, et en des secondes données 30' répertoriant le nom du porteur, sa date de naissance et la date de validité du passeport.

Il s'agit ici seulement d'un exemple simplifié donné pour une meilleure lisibilité des figures, puisque la nature et le nombre de ces données sont explicitées précisément dans les normes éditées par l'OACI (Organisation Civile de l'Aviation Mondiale).

Ces données sont imprimées sur la page 3 selon des techniques bien connues dans le domaine de l'impression fiduciaire.

A l'intérieur des données 30 est intégrée une information cachée I non discernable à l'oeil nu qui consiste ici en une répétition du message "ORIGINAL FCO".

La page additionnelle 6 est quant à elle ici constituée intégralement d'un matériau transparent et souple, de préférence de nature, polymérique tel que du polycarbonate. L'une des caractéristiques de ces matériaux de nature polymérique est de pouvoir être imprimés par les techniques usuelles de l'imprimerie telles que l'offset, la taille douce, la flexographie, la sérigraphie ou l'héliogravure.

De préférence, la page 6 aura pour caractéristique de pouvoir recevoir des marques en relief par impression en taille douce avec embossage timbre sec, gaufrage, estampage, pressage à chaud ou à froid ou par toute autre technique permettant de modifier sa surface en créant des déformation en creux et en reliefs.

Avantageusement, une autre caractéristique de cette page est de pouvoir être altérée superficiellement ou à coeur, voire perforée complètement à l'aide d'un rayon laser.

Dans ce dernier cas, et sous réserve que la page 6 soit formée au moins partiellement de polycarbonate, de polyester ou de polychlorure de vinyle, alors ces derniers auront été préalablement traités de manière à posséder les agents de surface ou à coeur, sensibles aux différentes longueurs d'ondes des rayonnements laser (infrarouge ou ultraviolet).

Dans la forme de réalisation des figures 6 et 7, la page 6 comporte un moyen 60 consistant en un traitement par embossage, afin de constituer un réseau de forme lenticulaire.

Ce moyen 60 est placé de manière à se superposer en partie, préférentiellement en totalité, à la photographie du porteur référencée 30.

Comme le montre la figure 7, en plaquant la page 6 contre la page 3, le moyen 60 vient révéler l'image cachée I dans la photographie selon le procédé de stéganographie.

Sous réserve que la page 6 soit souple et flexible, en la bougeant verticalement, l'effet de décodage des informations change avec un effet optique suggérant le relief.

Par ailleurs, la page 6 comporte un moyen d'authentification 7 qui est de préférence indépendant de l'identité du porteur, tel qu'un moyen en relation avec l'autorité émettrice du passeport.

Ce moyen est de préférence réalisé par embossage, afin de produire une marque sécurisée en relief décelable au toucher tel qu'un motif géométrique de type guilloche, du texte et/ou des chiffres lisibles directement et/ou microscopiques (lisibles au compte-fils) ou une ou plusieurs images latentes, avec des trames de traits agencées spécifiquement à la manière de la technique connue en impression taille douce. Dans un mode de réalisation alternatif, on peut combiner bien entendu deux ou trois des solutions ci-dessus.

Dans un mode de réalisation préféré, ce moyen d'authentification peut reprendre par exemple un blason avec les armoiries du pays émetteur, des micro lignes et des guilloches et au moins une image latente. Ainsi, la page 6 se trouve sécurisée et dispose d'une marque d'authentification.

Conformément à l'invention, la page 6 comporte la reproduction 8 des informations 30 et 30' portées par la page 3. Cette reproduction est constituée de la photographie 81 et des données 80 relatives au porteur. Ces dernières sont en outre rappelées totalement ou partiellement en microtexte 82.

Cette reproduction est formée préférentiellement par altération superficielle ou à coeur du matériau de la page 6, voire par perforation complète.

Ainsi, l'altération superficielle ou à coeur peut s'obtenir par un marquage laser de type gravure, gravure avec changement de couleur ou changement de couleur seul.

La (micro) perforation complète est obtenue de manière similaire par la technique de (micro) perforation laser.

Ainsi, il est inclus dans ce mode de réalisation un message caché dans la reproduction de la photographie du porteur du passeport. Il y est également adjoint de manière définitive mais mobile, comme une page normale, une page additionnelle capable de révéler ledit message.

De plus, cette page additionnelle est authentifiée par un moyen 7.

Enfin, ladite page est personnalisée par les données 80, 81 et 82 par une technique différente de celle utilisée pour mettre en oeuvre la page de données.

Ainsi, si une couche de protection en place sur la page de données 3 venait à être retirée, toute attaque frauduleuse sur le portrait du porteur, par réimpression en jet d'encre par exemple, que cette dernière soit partielle ou totale, viendrait altérer tout ou partie du message caché et ce, de manière évidente lorsqu'on apposera la page 6 par-dessus.

De plus, le portrait étant répété de manière lisible, réalisé à coeur, sur la page 6, il obligera, par une autre technique que l'impression jet d'encre à retoucher cette page également.

L'homme de l'art reconnaîtra dès lors que l'authentification dissimulée dans le premier portrait, ainsi que sa répétition claire et visible dans une seconde localisation, rend la tâche du falsificateur beaucoup plus ardue.

Bien entendu, dans un mode de réalisation non représenté, la reproduction 8 pourrait être limitée à la reproduction des informations 30 qui contiennent l'information cachée I. Dans ces conditions et comme indiqué plus haut, si on modifie l'information 30, il est aussi nécessaire de modifier la reproduction 8.

La réunion, sur une même page, des moyens permettant de "décoder" l'information cachée et de la reproduction, même partielle, des informations liées au porteur, rendent l'utilisation du document plus simple. A contrario, cela rend la tâche d'un contrefacteur extrêmement compliquée.

## Revendications

1. Document de sécurité qui a la forme d'un livret (1), tel qu'un passeport, et qui comporte au moins une page de données (3, 5) sur laquelle sont présentes des données (30, 30') dites "personnelles", c'est à dire spécifiques à son porteur, et dont au moins une partie de ces données intègre au moins une information cachée (I, I') non discernable à l'oeil nu ou "élément caché", ce livret (1) comportant une page additionnelle (6) qui fait corps avec ce dernier et dont au moins une zone est translucide ou transparente, dans cette zone étant incorporé au moins un moyen de révélation (60, 60') de ladite information cachée (I, I'), cette page additionnelle (6) permettant, en la plaquant contre ladite page de données (3, 5), de lire à travers ladite zone, ladite information cachée (I, I'), ceci sans dispositif et/ou apport d'énergie extérieur(s),
**caractérisé par le fait que** ladite page additionnelle (6) comporte par ailleurs des informations (8), dites informations reproduites, reproduisant au moins partiellement lesdites données personnelles (30, 30'), sur l'une de ses faces (au verso ou au recto) ou les deux faces, recouvrant ou non tout ou partie dudit moyen de révélation (60, 60'),
lesdites informations reproduites (8) personnalisant la page additionnelle (6) par une première technique de fabrication différente d'une deuxième technique de fabrication utilisée pour mettre en oeuvre la page de données.

2. Document de sécurité selon la revendication 1, **caractérisé en ce que** les données personnelles comprennent une photo du porteur, dans lequel les informations reproduites reproduisent ladite photo sur la page additionnelle.

3. Document de sécurité selon la revendication 1 ou 2, **caractérisé par le fait que** lesdites informations reproduites (8) sont formées à l'aide d'un rayon laser, par altération superficielle ou à coeur de ladite page (6), ou encore par perforation ou micro perforation de cette dernière.

4. Document de sécurité selon la revendication 1, caractérisé en ce la deuxième technique de fabrication est une technique d'impression jet d'encre.

5. Document de sécurité selon la revendication 1 ou 2, **caractérisé par le fait que** les informations reproduites (8) sont imprimées, notamment par impression laser ou jet d'encre.

6. Document de sécurité selon l'une des revendications 1 à 5, **caractérisé par le fait que** lesdites informations reproduites (8) reproduisent au moins la partie des données personnelles (30, 30') qui intègre ledit élément caché.

7. Document de sécurité selon l'une des revendications 1 à 6, **caractérisé par le fait que** l'intégralité de la page additionnelle (6) est transparente ou translucide.

8. Document de sécurité selon la revendication 1 à 7, **caractérisé par le fait que** ledit moyen de révélation (60, 60') occupe tout ou partie de la surface de ladite page additionnelle (6).

9. Document de sécurité selon l'une des revendications 1 à 8, **caractérisé par le fait qu'**au moins deux moyens (60,60') différents de révélation sont combinés en une même localisation de ladite page additionnelle (6) et sont aptes à révéler au moins deux informations cachées identiques ou différentes (I, I') dans la même zone de la page de données (3,5).

10. Document de sécurité selon l'une des revendications 1 à 9, qui comporte deux pages de données (3, 5), dont les données personnelles (30, 50) sont sur leurs faces en regard, **caractérisé par le fait que** chacune de ces pages (3, 5) intègre au moins une information cachée non discernable à l'oeil nu (I, I') et que ladite page additionnelle (6) comporte au moins deux moyens de révélation (60, 60'), un premier moyen (60) étant apte à révéler l'information cachée (I) associée à une (3) desdites pages quand elle est plaquée contre elle, tandis que le second moyen (60') est apte à révéler l'information cachée (I') associée à l'autre page (5) quand elle est plaquée contre elle.

11. Document de sécurité selon la revendication 10, **caractérisé par le fait que** lesdits moyens de révélation (60, 60') sont différents.

12. Document de sécurité selon l'unes des revendications précédentes, **caractérisé par le fait que** ledit moyen de révélation (60, 60') est choisi parmi les moyens suivants :
- un réseau tramé en lignes (300) apte à révéler une information cachée (I, I') par la technique de stéganographie ;
- un réseau tramé en points apte à révéler une information cachée (I, I') par la technique de stéganographie ;
- un filtre polarisant contenant des molécules chirales ou des cristaux liquides ;
- un filtre coloré interférant avec la (ou les) couleur(s) avec laquelle (lesquelles) ladite information cachée (I, I') est formée.

13. Document de sécurité selon la revendication 12, **caractérisé par le fait que** ledit réseau tramé en lignes (300) est imprimé, ou réalisé en relief, formant ainsi un réseau lenticulaire.

14. Document de sécurité selon la revendication 13, **caractérisé par le fait que** ledit réseau tramé en points est imprimé ou perforé.

15. Document de sécurité selon l'une des revendications précédentes, **caractérisé par le fait que** ladite page additionnelle (6) comporte par ailleurs au moins un moyen d'authentification et de sécurisation (7) indépendant de l'identité du porteur, et qui peut être ou non en relation avec l'autorité émettrice.

16. Document de sécurité selon la revendication 15, **caractérisé par le fait que** ledit moyen d'authentification (7) est réalisé par une impression, variable ou fixe, sur l'une des faces (au verso ou au recto) ou sur les deux faces de la page additionnelle (6), et recouvre ou non tout ou partie dudit moyen de révélation (60,60').

17. Document de sécurité selon la revendication 15, **caractérisé par le fait que** ledit moyen d'authentification (7) est réalisé par modification mécanique de la surface de la page (6), créant ainsi des déformations en creux ou en relief décelables au toucher.

18. Document de sécurité selon la revendication 15, **caractérisé par le fait que** ledit moyen d'authentification (7) consiste en un élément diffractif tel qu'un hologramme, ou en un motif obtenu par des jeux d'embossage et de vernissage.

## Patentansprüche

1. Sicherheitsdokument, das die Form eines Büchleins (1) hat, wie beispielsweise ein Reisepass, und das mindestens eine Datenseite (3, 5) umfasst, auf der so genannte "persönliche" Daten (30, 30'), d.h. trägerspezifische Daten, angeführt sind, und wobei zumindest ein Teil dieser Daten wenigstens eine versteckte Information (I, I'), die mit freiem Auge nicht zu erkennen ist, oder ein "verstecktes Element" einschließt, wobei das Büchlein (1) eine Zusatzseite (6) umfasst, die mit ihm aus einem Stück ist und von der mindestens eine Zone durchscheinend oder durchsichtig ist, wobei in dieser Zone mindestens ein Mittel zur Offenbarung (60, 60') der versteckten Information (I, I') eingegliedert ist, wobei es diese Zusatzseite (6), wenn sie an die Datenseite (3, 5) gedrückt wird, ermöglicht, die versteckte Information (I, I') durch die Zone zu lesen, und zwar ohne Vorrichtung und/oder Energiezufuhr von außen,
**dadurch gekennzeichnet, dass** die Zusatzseite (6) überdies so genannte reproduzierte Informationen (8) umfasst, die zumindest teilweise die persönlichen Daten (30, 30') auf einer ihrer Seiten (Rückseite oder Vorderseite) oder auf beiden Seiten wiedergeben und das ganze oder einen Teil des Offenbarungsmittels (60, 60') abdecken oder nicht,
wobei die wiedergegebenen Informationen (8) die Zusatzseite (6) durch eine erste Herstellungstechnik, die sich von einer zweiten Herstellungstechnik, die für den Einsatz der Datenseiten verwendet wird, unterscheidet, personalisiert werden.

2. Sicherheitsdokument nach Anspruch 1, **dadurch gekennzeichnet, dass** die persönlichen Daten ein Foto des Trägers umfassen, wobei die wiedergegebenen Informationen das Foto auf der Zusatzseite wiedergeben.

3. Sicherheitsdokument nach Anspruch 1 oder 2, **dadurch gekennzeichnet, dass** die wiedergegebenen Informationen (8) mit Hilfe eines Laserstrahls durch Änderung der Oberfläche oder des Kerns der Seite (6) oder auch durch Perforation oder Mikro-Perforation dieser letztgenannten gebildet sind.

4. Sicherheitsdokument nach Anspruch 1, **dadurch gekennzeichnet, dass** die zweite Herstellungstechnik eine Tintenstrahldrucktechnik ist.

5. Sicherheitsdokument nach Anspruch 1 oder 2, **dadurch gekennzeichnet, dass** die wiedergegebenen Informationen (8) insbesondere durch Laser- oder Tintenstrahldruck gedruckt sind.

6. Sicherheitsdokument nach einem der Ansprüche 1 bis 5, **dadurch gekennzeichnet, dass** die wiedergegebenen Informationen (8) zumindest den Teil der persönlichen Daten (30, 30') wiedergeben, der das versteckte Element einschließt.

7. Sicherheitsdokument nach einem der Ansprüche 1 bis 6, **dadurch gekennzeichnet, dass** die Gesamtheit der Zusatzseite (6) durchsichtig oder durchscheinend ist.

8. Sicherheitsdokument nach Anspruch 1 bis 7, **dadurch gekennzeichnet, dass** das Offenbarungselement (60, 60') die Gesamtheit oder einen Teil der Oberfläche der Zusatzseite (6) einnimmt.

9. Sicherheitsdokument nach einem der Ansprüche 1 bis 8, **dadurch gekennzeichnet, dass** wenigstens zwei unterschiedliche Offenbarungsmittel (60, 60') an einer selben Stelle der Zusatzseite (6) kombiniert und geeignet sind, mindestens zwei identische oder unterschiedliche versteckte Informationen (I, I') in derselben Zone der Datenseite (3, 5) zu offenbaren.

10. Sicherheitsdokument nach einem der Ansprüche 1 bis 9, das zwei Datenseiten (3, 5) umfasst, deren persönliche Daten (30, 50) auf ihren gegenüberliegenden Seiten vorhanden sind, **dadurch gekennzeichnet, dass** jede dieser Seiten (3, 5) mindestens eine nicht mit freiem Auge erkennbare Information (I, I') einschließt, und dass die Zusatzseite (6) mindestens zwei Offenbarungsmittel (60, 60') umfasst, wobei ein erstes Mittel (60) geeignet ist, die versteckte Information (I), die einer (3) der Seiten zugeordnet ist, wenn sie gegen sie gedrückt wird, zu offenbaren, während das zweite Mittel (60') geeignet ist, die versteckte Information (I'), die der anderen Seite (5) zugeordnet ist, wenn sie gegen sie gedrückt wird, zu offenbaren.

11. Sicherheitsdokument nach Anspruch 10, **dadurch gekennzeichnet, dass** die Offenbarungsmittel (60, 60') unterschiedlich sind.

12. Sicherheitsdokument nach einem der vorhergehenden Ansprüche, **dadurch gekennzeichnet, dass** das Offenbarungsmittel (60, 60') unter den folgenden Mitteln ausgewählt ist:
- einem Netz mit Zeilenraster (300), das geeignet ist, eine versteckte Information (I, I') durch die Technik der Steganographie zu offenbaren;
- einem Netz mit Punkteraster, das geeignet ist, eine versteckte Information (I, I') durch die Technik der Steganographie zu offenbaren;
- einem Polarisationsfilter, der chirale Moleküle oder Flüssigkristalle enthält;
- einem Farbfilter, der mit der (oder den) Farbe(n), mit der(denen) die versteckte Information (I, I') gebildet ist, interferiert.

13. Sicherheitsdokument nach Anspruch 12, **dadurch gekennzeichnet, dass** das Netz mit Zeilenraster (300) gedruckt oder als Relief hergestellt ist, wobei es auf diese Weise ein Linsengitter bildet.

14. Sicherheitsdokument nach Anspruch 13, **dadurch gekennzeichnet, dass** das Netz mit Punkteraster gedruckt oder perforiert ist.

15. Sicherheitsdokument nach einem der vorhergehenden Ansprüche, **dadurch gekennzeichnet, dass** die Zusatzseite (6) überdies mindestens ein unabhängiges Mittel zur Authentifizierung und Sicherung (7) der Identität des Trägers umfasst, das mit der ausstellenden Behörde in Verbindung stehen kann oder nicht.

16. Sicherheitsdokument nach Anspruch 15, **dadurch gekennzeichnet, dass** das Authentifizierungsmittel (7) durch einen variablen oder fixen Druck auf einer der Seiten (Rückseite oder Vorderseite) oder auf beiden Seiten der Zusatzseite (6) verwirklicht ist und die Gesamtheit oder einen Teil des Offenbarungsmittels (60, 60') abdeckt oder nicht.

17. Sicherheitsdokument nach Anspruch 15, **dadurch gekennzeichnet, dass** das Authentifizierungsmittel (7) durch mechanische Veränderung der Oberfläche der Seite (6) verwirklicht ist, wodurch hohle oder reliefartige Verformungen, die durch Berühren erkennbar sind, erzeugt werden.

18. Sicherheitsdokument nach Anspruch 15, **dadurch gekennzeichnet, dass** das Authentifizierungsmittel (7) in einem diffraktiven Element, wie einem Hologramm, oder in einem Motiv, das durch Füllen und Lackieren erhalten wird, besteht.

## Claims

1. A security document which has the form of a booklet (1), such as a passport, and which includes at least one page of data (3, 5) on which are present so-called « private » data (30, 30'), i.e. specific to its bearer, and for which at least one portion of these data integrates at least one piece of concealed information (1,1'), not perceivable to the naked eye, or « concealed element », this booklet (1) including an additional page (6) which is integral with the latter, and at least one area of which is translucent or transparent, at least one means (60, 60') for revealing said piece of concealed information (I, I') being integrated into this area, this additional page (6) allowing, by flattening it against said page of data (3, 5), reading through said area, said piece of concealed information (I, I'), this without any outer device and/or energy supply,
**characterized by** the fact that said additional page (6) moreover includes pieces of information (8), so-called pieces of reproduced information, at least partly reproducing said private data (30, 30'), on one of its faces (on the front or on the back) or on both faces, either covering or not all or part of said revealing means (60, 60'),
said pieces of reproduced information (8) customizing the additional page (6) with a first manufacturing technique different from a second manufacturing technique used for implementing the page of data.

2. The security document according to claim 1, **characterized in that** the private data comprise a photograph of the bearer, wherein the pieces of reproduced information reproduce said photograph on the additional page.

3. The security document according to claim 1 or 2, **characterized by** the fact that said pieces of reproduced information (8) are formed by means of a laser ray, with surface or core alteration of said page (6), or further by perforation or microperforation of the latter.

4. The security document according to claim 1, **characterized in that** the second manufacturing technique is an ink jet printing technique.

5. The security document according to claim 1 or 2, **characterized by** the fact that said pieces of reproduced information (8) are printed, notably by laser or ink jet printing.

6. The security document according to one of claims 1 to 5, **characterized by** the fact that said pieces of reproduced information (8) reproduce at least the portion of private data (30, 30') which integrates said concealed element.

7. The security document according to one of claims 1 to 6, **characterized by** the fact that the entirety of the additional page (6) is transparent or translucent.

8. The security document according to claim 1 to 7, **characterized by** the fact that said revealing means (60, 60') occupies all or part of the surface of said additional page (6).

9. The security document according to one of claims 1 to 8, **characterized by** the fact that at least two different revealing means (60, 60') are combined in a same localization of said additional page (6) and are able to reveal at least two pieces of concealed information, either identical or different, (I, I') in the same area of the page of data (3, 5).

10. The security document according to one of claims 1 to 9, which includes two pages of data (3, 5), the private data (30, 50) of which are on their faces opposite to each other, **characterized by** the fact that each of these pages (3, 5) integrates at least one piece of concealed information, not perceivable to the naked eye (I, I') and that said additional page (6) includes at least two revealing means (60, 60'), a first means (60) being able to reveal the piece of concealed information (I) associated with one (3) of said pages when it is flattened against it, while the second means (60') is able to reveal the piece of concealed information (I')associated with the other page (5), when it is flattened against it.

11. The security document according to claim 10, **characterized by** the fact that said revealing means (60, 60') are different.

12. The security document according to one of the preceding claims, **characterized by** the fact that said revealing means (60, 60') is selected from among the following means:
- a raster network with lines (300) able to reveal a piece of concealed information (I, I') by the steganographic technique;
- a raster network with dots able to reveal a piece of concealed information (I, I') by the steganographic technique;
- a polarizing filter containing chiral molecules or liquid crystals;
- a colored filter interfering with the color(s), with which said piece of concealed information (I, I') is formed.

13. The security document according to claim 12, **characterized by** the fact that said raster network with lines (300) is printed, or relief embossed, thus forming a lenticular network.

14. The security document according to claim 13, **characterized by** the fact that said raster network with dots is printed or perforated.

15. The security document according to one of the preceding claims, **characterized by** the fact that said additional page (6) moreover includes at least one means (7) for authentication and securement, independent of the identity of the bearer, and which may either be or not related to the issuing authority.

16. The security document according to claim 15, **characterized by** the fact that said authentication means (7) is achieved by a variable or set print on one of the faces (on the front or on the back) or on both faces of the additional page (6), and either covers or not all or part of said revealing means (60, 60').

17. The security document according to claim 15, **characterized by** the fact that said authentication means (7) is made by mechanically modifying the surface of the page (6), thereby generating recessed or raised deformations which may be detected upon touching them.

18. The security document according to claim 15, **characterized by** the fact that said authentication means (7) consists in a diffractive element such as a hologram, or in a pattern obtained by embossing and varnishing operations.
